# EUROPEAN PATENT SPECIFICATION

(11) **EP 2 289 786 B1**
(45) Date of publication and mention of the grant of the patent: **21.11.2018**
(21) Application number: 10174124.7
(22) Date of filing: 26.08.2010
(51) Int. Cl.: B62K 11/04, B62K 25/28, B62M 17/00, F01N 13/18

(54) **Motorcycle**
Motorrad
Motocyclette

(30) Priority: 31.08.2009 JP 2009200996
(43) Date of publication of application: 02.03.2011
(73) Proprietor: Yamaha Hatsudoki Kabushiki Kaisha (Yamaha Motor Co., Ltd.), Shizuoka 438-8501 (JP)
(72) Inventor: Kawase, Masao, Shizuoka-ken Shizuoka 438-8501 (JP); Matsui, Hiroaki, Shizuoka-ken Shizuoka 438-8501 (JP)
(74) Representative: Grünecker Patent- und Rechtsanwälte PartG mbB

(56) References cited:
- EP-A2- 1 614 613
- EP-A2- 1 908 678
- JP-A- 2004 276 877
- US-A- 4 422 519
- US-A- 4 484 650
- US-A- 4 667 762
- US-A- 4 673 052

## Description

The present invention relates to a motorcycle according to the preamble of independent claim 1. Such a motorcycles can be taken from the prior art document US 4,667,762 A. Said prior art document relates to a drive mechanism for a balloon tired motorcycle and discloses a trailing arm assembly for supporting the rear wheel. Said arm is supported at its forward end by means of a pair of pivot shafts. A drive shaft is arranged to be set aside from a center line of that arm means so that a gap is provided between a front portion of said arm and the drive shaft. The motorcycle is provided with an engine having an exhaust pipe. Said exhaust pipe stars in a forward direction and then bends to a rearward direction of the vehicle.

JP 2008-201418 A discloses a motorcycle that includes a vehicle body frame having a pivot shaft. An engine is supported at the vehicle body frame. A swing arm includes a front portion supported swingably by the pivot shaft. A drive shaft is provided on one of the left and right sides with respect to the center of the motorcycle to swing together with the swing arm and an exhaust pipe extends backward from the engine. In the motorcycle, an exhaust pipe is arranged to extend from an engine to the back on the outer left side of a rear swing arm and connected to a muffler.

In the motorcycle disclosed by JP 2008-201418 A, the exhaust pipe is extended on the outer side of the rear swing arm, and the vehicle has an increased width.

Prior art document US 4,673,052 A refers to a motorcycle with an engine having an exhaust pipe that extends to the rear side of the vehicle in a downward direction under the pivot joint of the rear arm and then in an upward direction. Said exhaust pipe is set aside from the rear arm.

Prior art document EP 1 614 613 A2 relates to a saddle-type vehicle and a method for attaching the rear arm, wherein the exhaust pipe extends from a lower side to an upper side through a gap at the front portion of the rear arm. Said motorcycle is provided with a driving chain for driving the rear wheel.

Prior art document US 4,484,650 A relates to a motorcycle mounted with a V-shaped engine, wherein the rear wheel is driven by a driving shaft arranged within a housing integrally formed within a rear arm, wherein exhaust pipes that extends from the rear cylinder to the rear side are routed through a gap within the rear arm from the upper side to the lower side thereof.

It is an object of the present invention to provide a motorcycle as indicated above that can keep the vehicle width from increasing.

According to the present invention said object is solved by a motorcycle having the features of independent claim 1. Preferred embodiments are laid down in the dependent claims.

Hereinafter, the present invention is illustrated and explained by means of preferred embodiments in conjunction with the accompanying drawings. In the drawings wherein:
- Fig. 1: is a left side view of a motorcycle according to a preferred embodiment.
- Fig. 2A: is a top view of a swing arm, an exhaust pipe, and a silencer in the motorcycle shown in Fig. 1.
- Fig. 2B: is a left side view of Fig. 2A.
- Fig. 2C: is a bottom view of Fig. 2A.
- Fig. 3: is a top view of a part of the swing arm shown in Fig. 2A.
- Fig. 4: is a left side view of the swing arm and a cushion unit shown in Fig. 2B.
- Fig. 5: is a perspective view of a part of the motorcycle shown in Fig. 1 when viewed from the back and the top.
- Fig. 6: is a left side view of a vehicle body frame in the motorcycle shown in Fig. 1.
- Fig. 7A: is a left side view of a seat frame in the motorcycle shown in Fig. 1.
- Fig. 7B: is a top view of Fig. 7A.
- Fig. 8: is a rear view of a side frame in the motorcycle shown in Fig. 1.

A preferred embodiment will be described in detail in conjunction with the accompanying drawings in which the same or corresponding elements are designated by the same reference characters and their description will not be repeated.

A motorcycle according to a preferred embodiment may be any type of motorcycle such as a moped, a scooter, off-road and on-road motorcycles, and an on/off-road motorcycle. The motorcycle may be not only two wheeled but also three or more wheeled. In the following description, the front, back, left, and right refer to these directions seen from a rider seated on a rider's seat 16 that will be described. In the drawings, "Fr" designates the front and "C" designates the center of the motorcycle in the widthwise (left-right) direction.

### Structure of Motorcycle

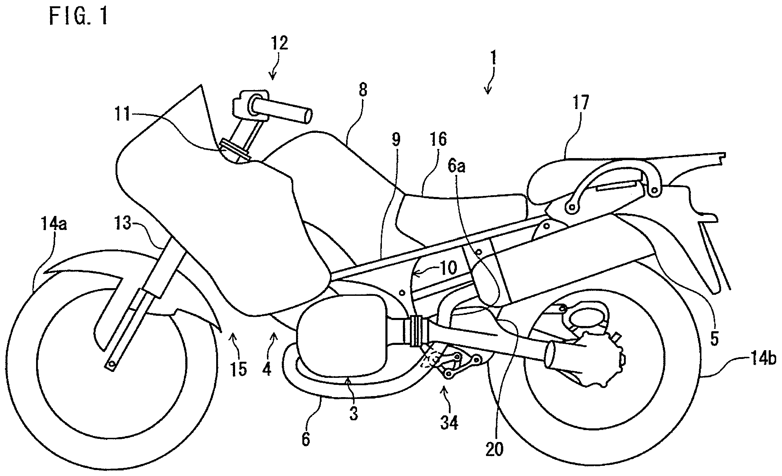

Referring to Fig. 1, the motorcycle 1 includes an engine 3, a silencer 5, an exhaust pipe 6, a fuel tank 8, a vehicle body frame 10, a handle 12, a front fork 13, a front wheel 14a, a rear wheel 14b, a vehicle body cover 15, the rider's seat 16, a tandem seat 17, a swing arm 20, and a link member 34. The vehicle body frame 10 includes a head pipe 11 and a seat frame 9.

The engine 3 is supported at the vehicle body frame 10. The engine 3 includes a cylinder, a cylinder head, a piston, a crankshaft, a transmission, and the like. The front end of the exhaust pipe 6 is connected to the cylinder head of the engine 3. The exhaust pipe 6 extends toward the back from the engine 3. More specifically, the exhaust pipe 6 comes out forward and then downward from the engine 3 and extends under the engine 3 and under the swing arm 20. The exhaust pipe 6 further extends upward from under the swing arm 20 through the inner side of the swing arm 20. When seen from the left of the motorcycle 1, the exhaust pipe 6 has a crossing portion 6a that crosses the swing arm 20. The silencer 5 is connected to the rear end of the exhaust pipe 6 and provided on the left side of the motorcycle 1.

The handle 12 is attached to the upper end of the head pipe 11. The front fork 13 is attached to the lower end of the head pipe 11. The front wheel 14a is attached rotatably to the lower end of the front fork 13. The swing arm 20 extends in the front-back direction of the motorcycle 1 and is supported swingably at the vehicle body frame 10.

The vehicle body cover 15 is attached to the vehicle body frame 10. The seat frame 9 extends backward and upward. The rider's seat 16 is provided above the seat frame 9. The fuel tank 8 is provided in front of the rider's seat 16. The tandem seat 17 is provided behind the rider's seat 16.

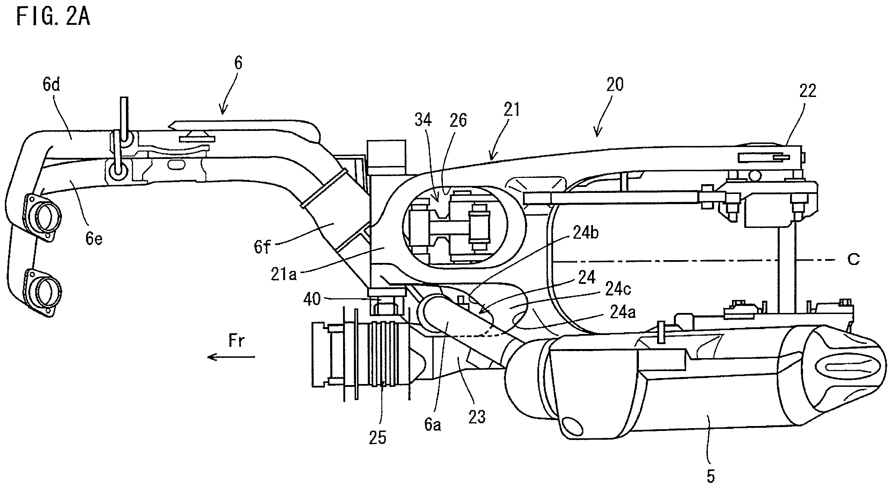

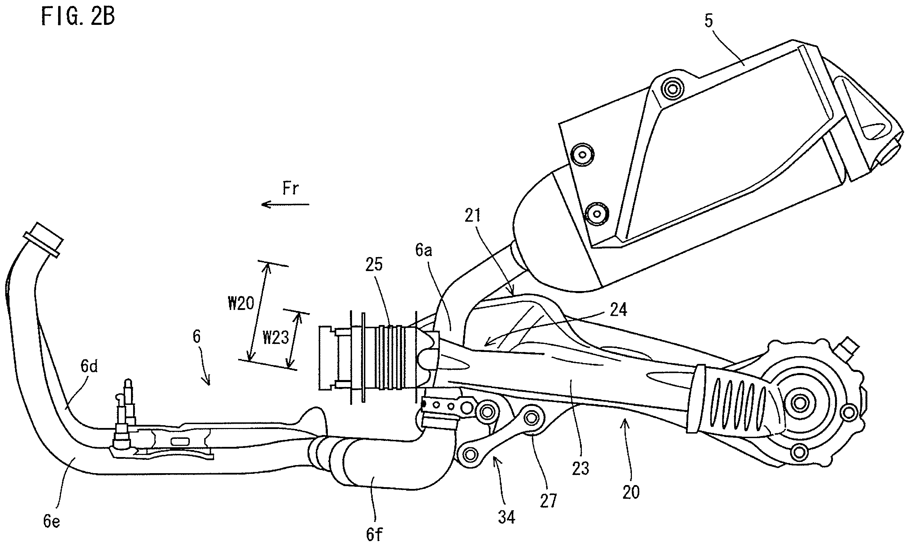

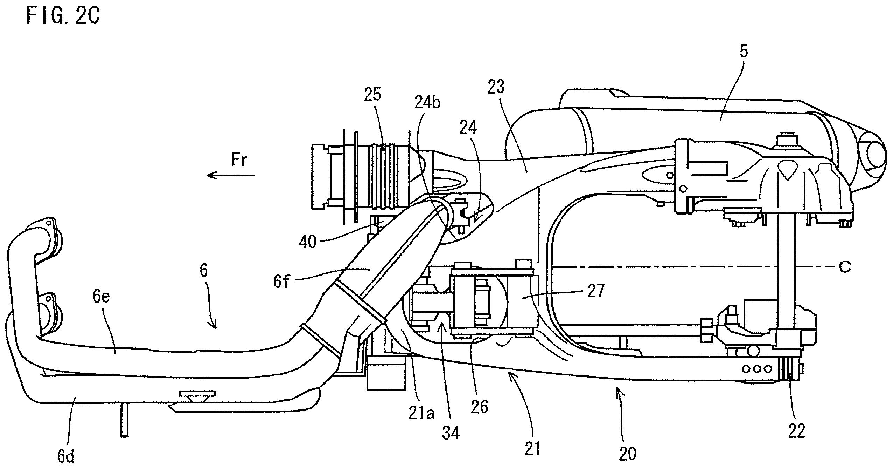

Referring to Figs. 2A, 2B, and 2C, the vehicle body frame 10 further includes a pivot shaft 40 that extends in the widthwise direction of the motorcycle 1. The swing arm 20 includes a front portion 21. The front portion 21 includes a front end 21a. The front end 21a is formed to have a tubular shape and extends in the widthwise direction of the motorcycle 1. The pivot shaft 40 is provided through the front end 21a. The swing arm 20 is supported swingably by the pivot shaft 40 at the front end 21a.

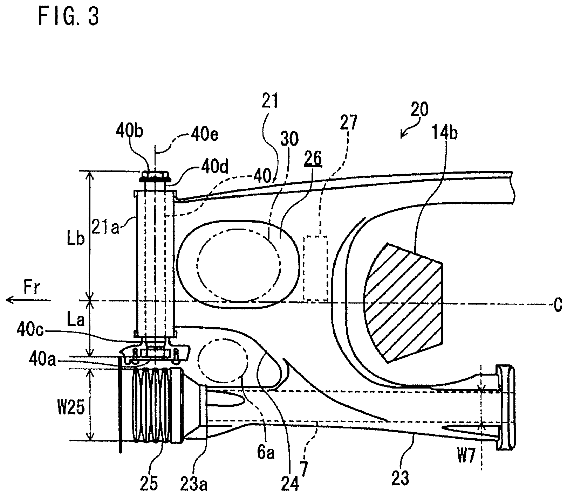

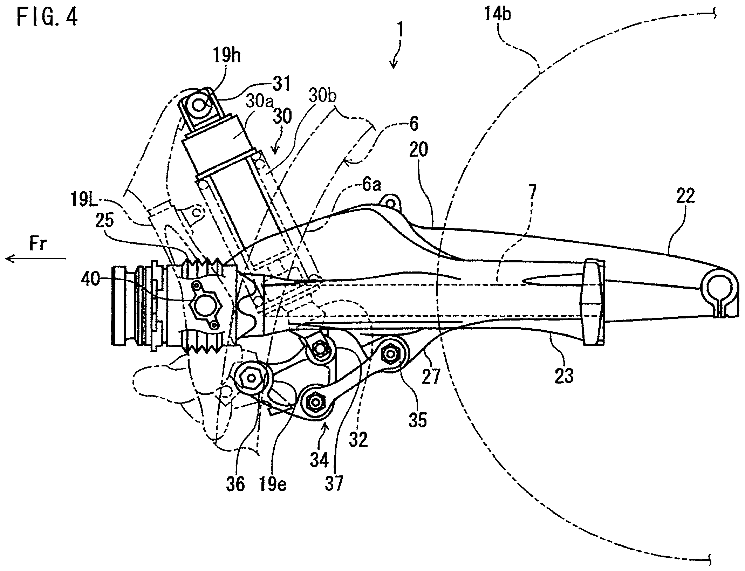

The front portion 21 of the swing arm 20 includes a hole 26 through which a cushion unit 30 (see Fig. 4) that will be described is passed. The hole 26 is formed behind the front end 21a and penetrates in the vertical direction. The swing arm 20 further includes a tubular portion 23 through which a drive shaft 7 (see Fig. 3) is passed. The tubular portion 23 is provided on the left side of the motorcycle 1 and extends in the front-back direction. The tubular portion 23 is formed integrally with the swing arm 20. In the swing arm 20, the front portion 21 and the tubular portion 23 (drive shaft 7) form a gap 24 between them.

Referring to Fig. 2A, the gap 24 is formed so that a (bottom) gap 24b at the bottom surface of the swing arm 20 is smaller than a (upper) gap 24a at the upper surface of the swing arm 20. The (bottom) gap 24b at the bottom surface of the swing arm 20 is smaller than a (upper) gap 24a at the upper surface of the swing arm 20 in the back. More specifically, the gap 24 has a taper surface 24c formed from the rear edge of the (bottom) gap 24b to the rear edge of the (upper) gap 24a.

Referring to Fig. 2B, the front portion 21 has a thickness W20 greater than the diameter W23 of the tubular portion 23. The thickness W20 of the front portion 21 is greater than the diameter W23 of the tubular portion 23 on an upper side of the front portion. More specifically, a bump is formed on the upper side of the front portion 21.

The swing arm 20 further includes a rear end 22. The rear wheel 14b shown in Fig. 1 is attached rotatably to the rear end 22 of the swing arm 20. The swing arm 20 further includes a cross member 27. The cross member 27 is provided behind the hole 26 and extends in the widthwise direction of the motorcycle 1.

The motorcycle 1 further includes a joint 25. The joint 25 is connected between the transmission of the engine 3 shown in Fig. 1 and the tubular portion 23 of the swing arm 20. The joint 25 is positioned on the left side of the pivot shaft 40.

According to the preferred embodiment, the engine 3 is a two-cylinder, transversely mounted engine. More specifically, the two cylinders are arranged in the widthwise direction of the motorcycle 1. Therefore, two exhaust pipes (exhaust pipe sections) 6d and 6e are connected to the engine 3. The exhaust pipes 6d and 6e extend obliquely downward to the right from the engine 3 and then toward the back on the right of and under the engine 3. The exhaust pipe 6 extends obliquely from the right to the left under the pivot shaft 40. The exhaust pipe 6 includes a catalyst 6f provided under the pivot shaft 40. The two exhaust pipes 6d and 6e are joined together before the catalyst 6f. The exhaust pipe 6 extends upward behind the catalyst 6f and is passed through the gap 24. More specifically, the crossing portion 6a of the exhaust pipe 6 is positioned in the gap 24. The exhaust pipe 6 extends backward and obliquely upward and is connected to the silencer 5.

As shown in Fig 3, the motorcycle 1 further includes a drive shaft 7. The drive shaft 7 is provided on the left of the motorcycle 1. More specifically, the drive shaft 7 is stored in the tubular portion 23 of the swing arm 20. The drive shaft 7 is fixed to the swing arm 20 and therefore swings around the center 40e of the pivot shaft 40 together with the swing arm 20 and the rear wheel 14b. The joint 25 is connected between the engine 3 and the drive shaft 7 shown in Fig. 1. The power of the engine 3 is transmitted to the rear wheel 14b through the joint 25 and the drive shaft 7, and the rear wheel 14b is driven accordingly. The joint 25 has a diameter W25 greater than the diameter W7 of the drive shaft 7. The joint 25 partly overlaps the crossing portion 6a of the exhaust pipe 6 when the motorcycle 1 is viewed from the back.

The pivot shaft 40 is provided deviated to the right from the center C of the motorcycle 1 in the widthwise direction. The pivot shaft 40 includes a left end 40c positioned on the left of the motorcycle 1 and a right end 40d positioned on the right of the motorcycle 1. The distance La between the left end 40a of the pivot shaft 40 and the center C is shorter than the distance Lb between the right end 40b of the pivot shaft 40 and the center C (La<Lb). In this way, the pivot shaft 40 is provided deviated, so that the gap 24 can be formed between the front portion 21 and the tubular portion 23 of the swing arm 20.

As shown in Fig. 4, the motorcycle 1 further includes the cushion unit 30 and a link member 34. The cushion unit 30 is supported at the vehicle body frame 10. The cushion unit 30 includes for example a "shock absorber" (also called a "damper") 30a and a coil spring 30b wound around it. The swing arm 20 is suspended by the cushion unit 30. More specifically, the cushion unit 30 is connected between the vehicle body frame 10 and the swing arm 20. The cushion unit 30 is passed through the hole 26 (Fig. 3) of the swing arm 20. The cushion unit 30 extends in the vertical direction and inclined forward so that the upper end 31 is positioned in front of the lower end 32. The cushion unit 30 partly overlaps the crossing portion 6a of the exhaust pipe 6 when the motorcycle 1 is seen from a side.

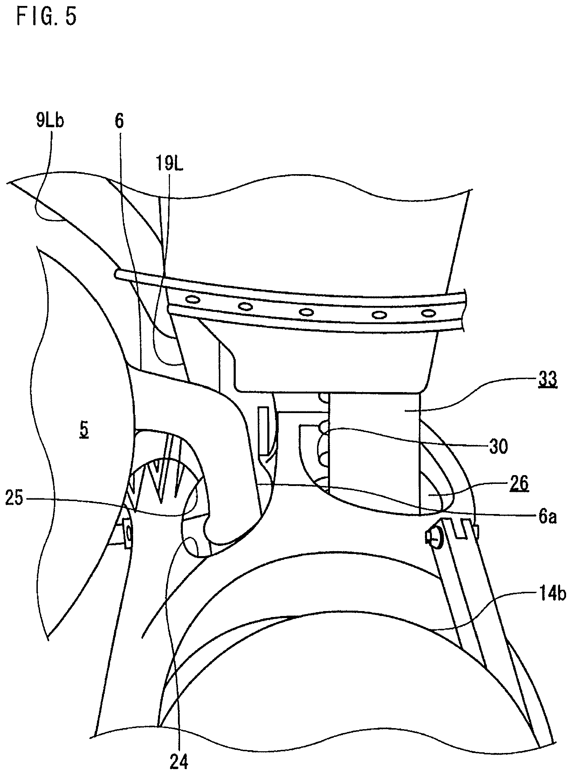

As shown in Fig. 5, the cushion unit 30 is provided as it is deviated to the right of the motorcycle 1. A part of the rear portion of the cushion unit 30 is covered with a suspension cover 33.

The link member 34 is coupled between the cross member 27 of the swing arm 20 and the vehicle body frame 10. The link member 34 includes coupling portions 35, 36, and 37. The coupling portions 35, 36, and 37 are coupled to one another. The lower end 32 of the cushion unit 30 is coupled to the coupling portion 37 of the link member 34. The upper end 31 of the cushion unit 30 is coupled to the coupling portion 19h of the vehicle body frame 10. The coupling portion 35 is coupled to the cross member 27 of the swing arm 20. The coupling portion 36 is coupled to the coupling portion 19e of the vehicle body frame 10.

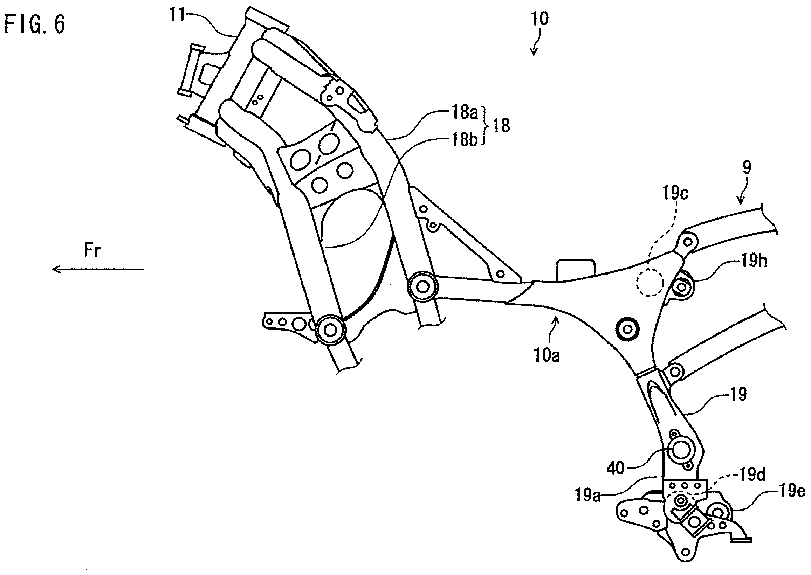

Referring to Fig. 6, the vehicle body frame 10 further includes a front frame 18 and a side frame 19. The front frame 18 includes an upper front frame 18a and a lower front frame 18b. The front frame 18 is connected to the head pipe 11 and extends backward and downward. The seat frame 9 is connected to the lower end of the upper front frame 18a through a (left and right) connection portion 10a. The side frame 19 is connected to the lower end of the connection portion 10a.

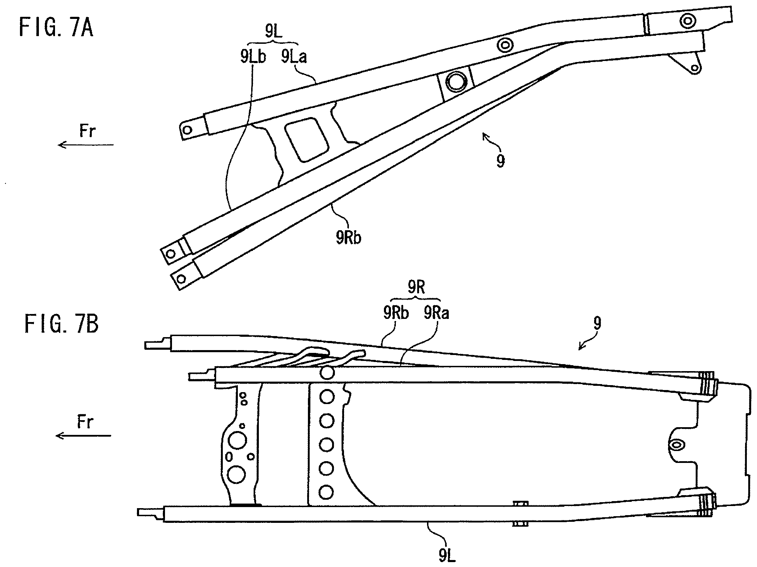

Referring to Figs. 7A and 7B, the seat frame 9 includes a left seat frame 9L and a right seat frame 9R. The left seat frame 9L includes an upper (left) seat frame 9La and a lower (left) seat frame 9Lb. The right seat frame 9R includes an upper (right) seat frame 9Ra and a lower (right) seat frame 9Rb.

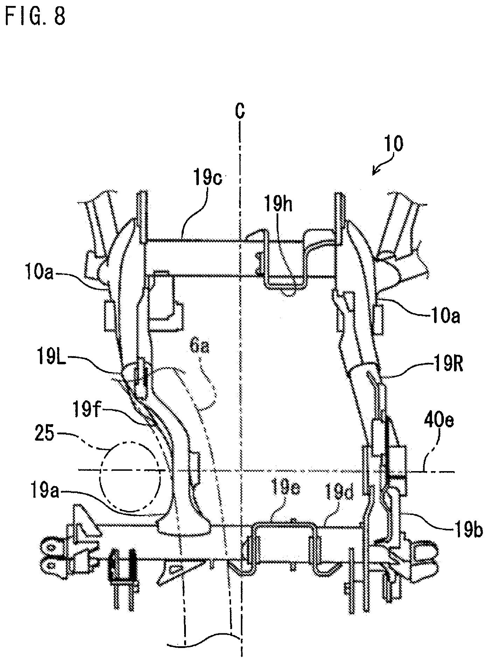

Referring to Fig. 8, the side frame 19 includes a left side frame 19L and a right side frame 19R. The left side frame 19L extends downward from the left connection portion 10a. The right side frame 19R extends downward from the right connection portion 10a. The left side frame 19L and the right side frame 19R are connected to each other through an upper cross member 19c and a lower cross member 19d. The upper cross member 19c and the lower cross member 19d extend in the widthwise direction of the motorcycle 1. The upper cross member 19c is connected between the left and right connection portions 10a. The lower cross member 19d is connected between the lower end 19a of the left side frame 19L and the lower end 19b of the right side frame 19R. The left side frame 19L is connected to the left end 40c of the pivot shaft 40 shown in Fig. 3. The right side frame 19R is connected to the right end 40d of the pivot shaft 40 shown in Fig. 3.

The left side frame 19L includes a bent portion 19f that bends inwardly in the widthwise direction. The crossing portion 6a of the exhaust pipe 6 partly overlaps the bent portion 19f of the left side frame 19L when the motorcycle 1 is viewed from the back. The joint 25 is provided on the left side of the bent portion 19f.

The coupling portion 19e is provided at the lower cross member 19d. The coupling portion 19h is provided at the upper cross member 19c. As shown in Fig. 4, the upper end 31 of the cushion unit 30 is coupled rotatably to the coupling portion 19h. The lower end 32 of the cushion unit 30 is coupled rotatably to the coupling portion 19e through a link member 34.

### Effects of the Preferred Embodiment

In the preferred embodiment, the front end 21a of the swing arm 20 is provided deviated to the right of the motorcycle 1 and therefore the gap 24 through which the exhaust pipe 6 is passed is formed between the front portion 21 of the swing arm 20 and the drive shaft 7. In this way, as the exhaust pipe 6 is passed through the inner side of the drive shaft 7, the vehicle width can be kept from increasing according to the preferred embodiment.

The (bottom) gap 24b is smaller than the (upper) gap 24a in the back, and therefore the swing arm 20 can have high rigidity while the swing arm 20 is prevented from interfering with the crossing portion 6a of the exhaust pipe 6 during swinging.

The thickness W20 (in up-down direction) of the front portion 21 is greater than the diameter W23 of the tubular portion 23 on the upper side and therefore the swing arm 20 can have high rigidity even though the gap 24 is formed.

The exhaust pipe 6 extends from the right to the left of the motorcycle 1 under the pivot shaft 40, and therefore the exhaust pipe 6 can have a large length according to the preferred embodiment. In addition, the catalyst 6f is provided under the pivot shaft 40, so that the size of the catalyst 6f can have an increased size according to the present preferred embodiment.

When the motorcycle 1 is viewed from the back, the exhaust pipe 6 partly overlaps the left side frame 19L and is not provided on the outer side of the left side frame 19L, and therefore the vehicle width can be further kept from increasing according to the preferred embodiment.

The joint 25 is positioned on the left side of the pivot 40. A portion behind the joint 25 in the tubular portion 23 has its diameter smaller than that of the joint 25. The tubular portion 23 of the swing arm 20 is provided close to the exhaust pipe 6 so that the joint 25 partly overlaps the exhaust pipe 6 when the motorcycle 1 is viewed from the back. Therefore, the vehicle width can be further kept from increasing according to the present preferred embodiment.

The cross member 27 is provided behind the hole 26 through which the cushion unit 30 is passed, the link member 34 is coupled between the cross member 27 and the vehicle body frame 10, the cushion unit 30 is coupled to the link member 34, not on the outer side of the swing arm 20, and therefore the vehicle width is not increased because of the cushion unit 30.

The cushion unit 30 partly overlaps the exhaust pipe 6 when the motorcycle 1 is viewed from a side and the exhaust pipe 6 is provided through the inner side of the drive shaft 7, so that the vehicle width can be further kept from increasing according to the present preferred embodiment.

The embodiment provides a motorcycle 1, comprising: a vehicle body frame 10 including a pivot shaft 40; an engine 3 supported at the vehicle body frame 10; a cushion unit 30 supported at the vehicle body frame 10; a swing arm 20 including a front portion 21 including a front end 21a, supported swingably by the pivot shaft 40 at the front end 21a, and suspended by the cushion unit 30; a drive shaft 7 provided on one of the left and right sides with respect to the center C of the motorcycle to swing together with the swing arm 20; an exhaust pipe 6 extending backward from the engine 3; and a silencer 5 connected to the exhaust pipe 6 and provided on one of the left and right sides with respect to the center C of the motorcycle, the cushion unit 30, the pivot shaft 40, and the front end 21a of the swing arm 20 being provided deviated to the other of the left and right sides with respect to the center C of the motorcycle, the front portion 21 of the swing arm 20 and the drive shaft 7 forming a gap 24 therebetween, the exhaust pipe 6 extending upward from under the swing arm 20 and being passed through the gap 24.

The gap 24 is formed so that a gap 24b at the bottom surface of the swing arm 20 is smaller than a gap 24a at the upper surface of the swing arm 20. The gap 24b at the bottom surface of the swing arm 20 is smaller than the gap 24a at the upper surface of the swing arm 20 in the back.

The swing arm 20 further comprises a tubular portion 23 through which the drive shaft 7 is passed, and the gap 24 is formed between the front portion 21 and the tubular portion 23. The front portion 21 has a thickness W20 greater than the diameter W23 of the tubular portion 23. The thickness of the front portion 21 is greater than the diameter W23 of the tubular portion 23 on an upper side of the front portion 21.

The exhaust pipe 6 extends under the pivot shaft 40 from one of the left and right of the motorcycle to the other. The exhaust pipe 6 comprises a catalyst 6f provided under the pivot shaft 40.

The pivot shaft 40 comprises: a first end 40c positioned on one of the left and right of the motorcycle; and a second end 40d positioned on the other of the left and right of the motorcycle. The vehicle body frame 10 comprises: a first side frame 19L connected to the first end 40c of the pivot shaft 40; and a second side frame 19R connected to the second end 40d of the pivot shaft 40, and the exhaust pipe 6 partly overlaps the first side frame 19L when the motorcycle is viewed from the back.

The motorcycle further comprising a joint 25 positioned on a side of the pivot shaft 40, the joint partly overlapping the exhaust pipe 6 when the motorcycle is viewed from the back. The swing arm 20 further comprises a cross member 27 extending in the widthwise direction of the motorcycle, the motorcycle further comprising a link member 34 coupled between the cross member 27 and the vehicle body frame 10, the cushion unit 30 being coupled to the link member 34. The front portion 21 of the swing arm 20 comprises a hole 26 through which the cushion unit 30 is passed. The cushion unit 30 partly overlaps the exhaust pipe 6 when the motorcycle is viewed from a side.

A motorcycle 1 includes a vehicle body frame 10, an engine 3, a cushion unit 30, a swing arm 20, a drive shaft 7, an exhaust pipe 6, and a silencer 5. The vehicle body frame 10 includes a pivot shaft 40. The engine 3 is supported at the vehicle body frame 10. The cushion unit 30 is supported at the vehicle body frame 10. The swing arm 20 includes a front portion 21. The front portion 21 includes a front end 21a. The swing arm 20 is supported swingably by the pivot shaft 40 at the front end 21a and suspended by the cushion unit 30. The drive shaft 7 is provided on the left side with respect to the center C of the motorcycle 1 and swings together with the swing arm 20. The exhaust pipe 6 extends backward from the engine 3. The silencer 5 is connected to the exhaust pipe 6 and provided on the left side with respect to the center C of the motorcycle 1. The cushion unit 30, the pivot shaft 40, and the front end 21a of the swing arm 20 are provided deviated to the right side of the motorcycle 1. A gap 24 is formed between the front portion 21 of the swing arm 20 and the drive shaft 7. The exhaust pipe 6 extends upward from under the swing arm 20 and is passed through the gap 24. Consequently, the motorcycle 1 can keep its vehicle width from increasing.

According to the embodiment it is provided a motorcycle comprising a vehicle body frame 10 including a pivot shaft 40, an engine 3 supported at the vehicle body frame 10, a swing arm 20 including a front portion 21 supported swingably by the pivot shaft 40, a drive shaft 7 provided on one of the left and right sides with respect to the center C of the motorcycle to swing together with the swing arm 20, and an exhaust pipe 6 extending backward from the engine 3. The front portion 21 of the swing arm 20 and the drive shaft 7 are forming a gap 24 therebetween, wherein the exhaust pipe 6 extends upward from under the swing arm 20 and being passed through the gap 24.

Said embodiment further comprises a cushion unit 30 supported at the vehicle body frame 10, wherein the front portion 21 of the swing arm 20 is suspended by the cushion unit 30. The gap 24 is formed between the front portion 21 of the swing arm 20 and the drive shaft 24, and the cushion unit 30, the pivot shaft 40 and the front portion 21 of the swing arm 20 being provided deviated to the other of the left and right sides with respect to the center C of the motorcycle. The swing arm 20 further comprises a cross member 27 extending in the widthwise direction of the motorcycle. The motorcycle further comprising a link member 34 coupled between the cross member 27 and the vehicle body frame 10, the cushion unit 30 being coupled to the link member 34. According to the embodiment, the front portion 21 of the swing arm 20 comprises a hole 26 through which the cushion unit 30 is passed. The cushion unit 30 partly overlaps the exhaust pipe 6 when the motorcycle is viewed from a side.

Said embodiment further comprises a silencer 5 connected to the exhaust pipe 6 and provided on one of the left and right sides with respect to the center C of the motorcycle, the exhaust pipe 6 extends from under the swing arm 20 through the gap 24 upward to the silencer 5.

According to the embodiment, the gap 24 is formed so that a bottom gap 24b at the bottom surface of the swing arm 20 is smaller in front-back direction than an upper gap 24a at the upper surface of the swing arm 20. The upper gap 24a extends further to the back of the motorcycle than the bottom gap 24b.

According to the embodiment, the swing arm 20 further comprises a tubular portion 23 through which the drive shaft 7 is passed, and the gap 24 is formed between the front portion 21 and the tubular portion 23. The front portion 21 has a thickness W20 in up-down direction of the motorcycle greater than the diameter W23 of the tubular portion 23. The upper side of the front portion 21 extends in upward direction of the motorcycle so that the thickness of the front portion 21 is greater than the diameter W23 of the tubular portion 23.

### Modifications

According to the preferred embodiment described above, the drive shaft 7 and the silencer 5 are provided on the left side and the cushion unit 30, the pivot shaft 40, and the front end 21a of the swing arm 20 are provided as they are deviated to the right side. However, the drive shaft 7 may be provided on the right side. The silencer 5 may be provided on the right. The cushion unit 30 may be provided deviated to the left. The pivot shaft 40 may be provided deviated to the left. The front end 21a of the swing arm 20 may be provided deviated to the left side.

Only a single silencer 5 is provided in the above-described preferred embodiment. However, two or more silencers 5 may be provided. In this case, at least one of the silencers 5 is provided on the side of the drive shaft 7, either on the left or right side.

The engine 3 according to the above-described preferred embodiment is a two-cylinder, transversely mounted engine. However, the engine 3 may have a single cylinder or three or more cylinders. The engine 3 may be a horizontally opposed engine having multiple cylinders.

The drive shaft 7 according to the above described preferred embodiment is covered with the tubular portion 23. However, the drive shaft 7 may be exposed.

The rear wheel 14b according to the present preferred embodiment is supported by the swing arm 20 on its both sides. However, the rear wheel 14b may be supported by the swing arm only on one side.

## Claims

1. A motorcycle comprising:
a vehicle body frame (10) including a pivot shaft (40);
an engine (3) supported at the vehicle body frame (10);
a swing arm (20) including a front portion (21) supported swingably by the pivot shaft (40);
a drive shaft (7) provided on one of the left and right sides with respect to the center (C) of the motorcycle to swing together with the swing arm (20);
an exhaust pipe (6) extending backward from the engine (3),
the front portion (21) of the swing arm (20) and the drive shaft (7) forming a gap (24) therebetween, **characterized in that** the exhaust pipe (6) extending upward from under the swing arm (20) and being passed through the gap (24).

2. A motorcycle according to claim 1, **characterized by** a cushion unit (30) supported at the vehicle body frame (10), wherein the front portion (21) of the swing arm (20) is suspended by the cushion unit (30), the gap (24) is formed between the front portion (21) of the swing arm (20) and the drive shaft (24), and the cushion unit (30), the pivot shaft (40) and the front portion (21) of the swing arm (20) being provided deviated to the other of the left and right sides with respect to the center (C) of the motorcycle.

3. A motorcycle according to claim 2, **characterized in that** the swing arm (20) further comprises a cross member (27) extending in the widthwise direction of the motorcycle,
the motorcycle further comprising a link member (34) coupled between the cross member (27) and the vehicle body frame (10), the cushion unit (30) being coupled to the link member (34).

4. A motorcycle according to claim 2 or 3, **characterized in that** the front portion (21) of the swing arm (20) comprises a hole (26) through which the cushion unit (30) is passed.

5. A motorcycle according to at least one of the claims 2 to 4, **characterized in that** the cushion unit (30) partly overlaps the exhaust pipe (6) when the motorcycle is viewed from a side.

6. A motorcycle according to at least one of the claims 1 to 5, **characterized by** a silencer (5) connected to the exhaust pipe (6) and provided on one of the left and right sides with respect to the center (C) of the motorcycle, the exhaust pipe (6) extends from under the swing arm (20) through the gap (24) upward to the silencer (5).

7. A motorcycle according to at least one of the claims 1 to 6, **characterized in that** the gap (24) is formed so that a bottom gap (24b) at the bottom surface of the swing arm (20) is smaller in front-back direction than an upper gap (24a) at the upper surface of the swing arm (20).

8. A motorcycle according to claim 7, **characterized in that** the upper gap (24a) extends further to the back of the motorcycle than the bottom gap (24b).

9. A motorcycle according to at least one of the claim 1 to 8, **characterized in that** the swing arm (20) further comprises a tubular portion (23) through which the drive shaft (7) is passed, and
the gap (24) is formed between the front portion (21) and the tubular portion (23).

10. A motorcycle according to claim 9, **characterized in that** the front portion (21) has a thickness (W20) in up-down direction of the motorcycle greater than the diameter (W23) of the tubular portion (23).

11. A motorcycle according to claim 10, **characterized in that** the upper side of the front portion (21) extends in upward direction of the motorcycle so that the thickness of the front portion (21) is greater than the diameter (W23) of the tubular portion (23).

12. A motorcycle according to at least one of the claims 1 to 11, **characterized in that** the exhaust pipe (6) extends under the pivot shaft (40) from one of the left and right of the motorcycle to the other.

13. A motorcycle according to at least one of the claims 1 to 12, **characterized in that** the exhaust pipe (6) comprises a catalyst (6f) provided under the pivot shaft (40).

14. A motorcycle according to at least one of the claims 1 to 13, **characterized in that** the pivot shaft (40) comprises:
a first end (40c) positioned on one of the left and right of the motorcycle; and
a second end (40d) positioned on the other of the left and right of the motorcycle,
the vehicle body frame (10) comprises:
a first side frame (19L) connected to the first end (40c) of the pivot shaft (40); and
a second side frame (19R) connected to the second end (40d) of the pivot shaft (40), and
the exhaust pipe (6) partly overlaps the first side frame (19L) when the motorcycle is viewed from the back.

15. A motorcycle according to at least one of the claims 1 to 14, **characterized by** a joint (25) between the engine (3) and the drive shaft (7) is positioned on a side of the pivot shaft (40), the joint partly overlapping the exhaust pipe (6) when the motorcycle is viewed from the back.

## Patentansprüche

1. Ein Motorrad, das umfasst:
einen Fahrzeug-Körper-Rahmen (10), der eine Schwenk-Welle (40) beinhaltet;
einen Motor (3), der an dem Fahrzeug-Körper-Rahmen (10) gelagert ist;
einen Schwenk-Arm (20), der einen Vorder-Abschnitt (21) beinhaltet, der schwenkbar durch die Schwenk-Welle (40) gelagert ist;
eine Antriebs-Welle (7), die an einer von den linken und rechten Seiten mit Bezug auf die Mitte (C) des Motorrads vorgesehen ist, um zusammen mit dem Schwenk-Arm (20) zu schwingen;
ein Abgas-Rohr (6), das sich von dem Motor (3) nach hinten erstreckt,
der Vorder-Abschnitt (21) des Schwenk-Arms (20) und die Antriebs-Welle (7) bilden dazwischen einen Spalt (24), **dadurch gekennzeichnet, dass** das Abgas-Rohr (6) sich nach oben von unter dem Schwenk-Arm (20) erstreckt und durch den Spalt (24) hindurchtritt.

2. Ein Motorrad gemäß Anspruch 1, **gekennzeichnet durch** eine Dämpfer-Einheit (30), die an dem Fahrzeug-Körper-Rahmen (10) gelagert ist, wobei der Vorder-Abschnitt (21) des Schwenk-Arms (20) durch die Dämpfer-Einheit (30) abgefedert ist, der Spalt (24) ist zwischen dem Vorder-Abschnitt (21) des Schwenk-Arms (20) und der Antriebs-Welle (24) ausgebildet, und die Dämpfer-Einheit (30), die Schwenk-Welle (40) und der Vorder-Abschnitt (21) des Schwenk-Arms (20) sind abweichend zu der anderen von den linken und der rechten Seiten mit Bezug auf die Mitte (C) des Motorrads vorgesehen.

3. Ein Motorrad gemäß Anspruch 2, **dadurch gekennzeichnet, dass** der Schwenk-Arm (20) weiterhin ein Quer-Element (27) umfasst, das sich in die Breiten-Richtung des Motorrads erstreckt,
das Motorrad umfasst weiter ein Verbindungselement (34), das zwischen dem Quer-Element (27) und dem Fahrzeug-Körper-Rahmen (10) gekoppelt ist, die Dämpfer-Einheit (30) ist an das Verbindungselement (34) gekoppelt.

4. Ein Motorrad gemäß Anspruch 2 oder 3, **dadurch gekennzeichnet, dass** der Vorder-Abschnitt (21) des Schwenk-Arms (20) ein Loch (26) umfasst, durch welches die Dämpfer-Einheit (30) hindurchtritt.

5. Ein Motorrad gemäß zumindest einem der Ansprüche 2 bis 4, **dadurch gekennzeichnet, dass** die Dämpfer-Einheit (30) teilweise das Abgas-Rohr (6) überlappt, wenn das Motorrad von der Seite betrachtet ist.

6. Ein Motorrad gemäß irgendeinem der Ansprüche 1 bis 5, **dadurch gekennzeichnet, dass** ein Schall-Dämpfer (5) mit dem Abgas-Rohr (6) verbunden ist, und an einer von den linken und rechten Seiten mit Bezug auf die Mitte (C) des Motorrads vorgesehen ist, das Abgas-Rohr (6) erstreckt sich von unter dem Schwenk-Arm (20) durch den Spalt (24) nach oben zu dem Schall-Dämpfer (5).

7. Ein Motorrad gemäß zumindest einem der Ansprüche 1 bis 6, **dadurch gekennzeichnet, dass** der Spalt (24) ausgebildet ist, so dass ein unterer Spalt (24b) an der unteren Fläche des Schwenk-Arms (20) kleiner ist, in Vorder-Rück-Richtung, als ein oberer Spalt (24a) an der oberen Oberfläche des Schwenk-Arms (20).

8. Ein Motorrad gemäß Anspruch 7, **dadurch gekennzeichnet, dass** der obere Spalt (24a) sich weiter nach hinten von dem Motorrad erstreckt als der untere Spalt (24b).

9. Ein Motorrad gemäß zumindest einem der Ansprüche 1 bis 8, **dadurch gekennzeichnet, dass** der Schwenk-Arm (20) weiterhin einen Rohr-Abschnitt (23) umfasst, durch welchen die Antriebs-Welle (7) hindurchtritt, und
der Spalt (24) ist zwischen dem Vorder-Abschnitt (21) und dem Rohr-Abschnitt (23) ausgebildet.

10. Ein Motorrad gemäß Anspruch 9, **dadurch gekennzeichnet, dass** der Vorder-Abschnitt (21) eine Dicke (W20) in einer Oben-Unten-Richtung des Motorrads hat, größer als der Durchmesser (W23) des Rohr-Abschnitts (23).

11. Ein Motorrad gemäß Anspruch 10, **dadurch gekennzeichnet, dass** die obere Seite des Vorder-Abschnitts (21) sich nach oben von dem Motorrad erstreckt, so dass die Dicke des Vorder-Abschnitts (21) größer ist als der Durchmesser (W23) des Rohr-Abschnitts (23).

12. Ein Motorrad gemäß zumindest einem der Ansprüche 1 bis 11, **dadurch gekennzeichnet, dass** das Abgas-Rohr (6) sich unter der Schwenk-Welle (40) von einer von den linken und rechten Seiten von dem Motorrad zu der anderen erstreckt.

13. Ein Motorrad gemäß zumindest einem der Ansprüche 1 bis 12, **dadurch gekennzeichnet, dass** das Abgas-Rohr (6) einen Katalysator (6f) umfasst, der unter der Schwenk-Welle (40) vorgesehen ist.

14. Ein Motorrad gemäß zumindest einem der Ansprüche 1 bis 13, **dadurch gekennzeichnet, dass** die Schwenk-Welle (40) umfasst:
ein erstes Ende (40c), das an einem von dem linken und dem rechten von dem Motorrad positioniert ist; und
ein zweites Ende (40d), das an dem anderen von den linken und rechten Seiten des Motorrads positioniert ist,
der Fahrzeug-Körper-Rahmen (10) umfasst:
einen ersten Seiten-Rahmen (19L), der mit dem ersten Ende (40c) der Schwenk-Welle (40) verbunden ist; und
einen zweiten Seiten-Rahmen (19R), der mit dem zweiten Ende (40d) der Schwenk-Welle (40) verbunden ist, und
das Abgas-Rohr (6) überlappt teilweise mit dem ersten Seiten-Rahmen (19L), wenn das Motorrad von hinten betrachtet ist.

15. Ein Motorrad gemäß zumindest einem der Ansprüche 1 bis 14, **gekennzeichnet durch** ein Gelenk (25) zwischen dem Motor (3) und der Antriebs-Welle (7) ist an einer Seite der Schwenk-Welle (40) positioniert, das Gelenk überlappt teilweise das Abgas-Rohr (6), wenn das Motorrad von hinten betrachtet ist.

## Revendications

1. Motocyclette comprenant :
un châssis de corps de véhicule (10) incluant un axe de pivotement (40) ;
un moteur (3) supporté par le châssis de corps de véhicule (10) ;
un bras oscillant (20) incluant une portion avant (21) supportée de manière oscillante par l'axe de pivotement (40) ;
un arbre d'entraînement (7) pourvu sur un côté parmi les côtés gauche et droit par rapport au centre (C) de la motocyclette pour osciller conjointement au bras oscillant (20) ;
un tuyau d'échappement (6) qui s'étend à l'arrière du moteur (3),
la portion avant (21) du bras oscillant (20) et l'arbre d'entraînement (7) formant un intervalle (24) entre eux,
**caractérisée en ce que** le tuyau d'échappement (6) s'étend vers le haut depuis la partie inférieure du bras oscillant (20) et passant à travers l'intervalle (24).

2. Motocyclette selon la revendication 1, **caractérisée par** une unité d'amortissement (30) supportée par le châssis de corps de véhicule (10), dans laquelle la portion avant (21) du bras oscillant (20) est suspendue par l'unité d'amortissement (30), l'intervalle (24) est formé entre la portion avant (21) du bras oscillant (20) et l'arbre d'entraînement (24), et l'unité d'amortissement (30), l'axe de pivotement (40) et la portion avant (21) du bras oscillant (20) est pourvue de manière déviée vers l'autre côté parmi les côtés gauche et droit par rapport au centre (C) de la motocyclette.

3. Motocyclette selon la revendication 2, **caractérisée en ce que**
le bras oscillant (20) comprend en outre un élément d'entretoise (27) qui s'étend en direction de la largeur de la motocyclette,
la motocyclette comprenant en outre un élément de liaison (34) couplé entre l'élément d'entretoise (27) et le châssis de corps de véhicule (10), l'unité d'amortissement (30) étant couplée à l'élément de liaison (34).

4. Motocyclette selon la revendication 2 ou 3, **caractérisée en ce que** la portion avant (21) du bras oscillant (20) comprend un trou (26) à travers lequel passe l'unité d'amortissement (30).

5. Motocyclette selon au moins l'une des revendications 2 à 4, **caractérisée en ce que** l'unité d'amortissement (30) chevauche partiellement le tuyau d'échappement (6) quand la motocyclette est vue depuis un côté.

6. Motocyclette selon au moins l'une des revendications 1 à 5, **caractérisée par** un silencieux (5) connecté au tuyau d'échappement (6) et pourvu sur un côté parmi les côtés gauche et droit par rapport au centre (C) de la motocyclette, le tuyau d'échappement (6) s'étendant depuis la partie inférieure du bras oscillant (20) à travers l'intervalle (24) vers le haut vers le silencieux (5).

7. Motocyclette selon au moins l'une des revendications 1 à 6, **caractérisée en ce que** l'intervalle (24) est formé de telle sorte qu'un intervalle inférieur (24b) à la surface inférieure du bras oscillant (20) est inférieur en direction avant-arrière à un intervalle supérieur (24a) à la surface supérieure du bras oscillant (20).

8. Motocyclette selon la revendication 7, **caractérisée en ce que** l'intervalle supérieur (24a) s'étend plus loin vers l'arrière de la motocyclette que l'intervalle inférieur (24b) .

9. Motocyclette selon au moins l'une des revendications 1 à 8, **caractérisée en ce que**
le bras oscillant (20) comprend en outre une portion tubulaire (23) à travers laquelle passe l'arbre d'entraînement (7), et
l'intervalle (24) est formé entre la portion avant (21) et la portion tubulaire (23).

10. Motocyclette selon la revendication 9, **caractérisée en ce que** la portion avant (21) présente une épaisseur (W20) en direction haut-bas de la motocyclette supérieure au diamètre (W23) de la portion tubulaire (23).

11. Motocyclette selon la revendication 10, **caractérisée en ce que** le côté supérieur de la portion avant (21) s'étend vers le haut de la motocyclette, de telle sorte que l'épaisseur de la portion avant (21) est supérieure au diamètre (W23) de la portion tubulaire (23).

12. Motocyclette selon au moins l'une des revendications 1 à 11, **caractérisée en ce que** le tuyau d'échappement (6) s'étend sous l'axe de pivotement (40) depuis le côté gauche ou le côté droit de la motocyclette vers l'autre côté.

13. Motocyclette selon au moins l'une des revendications 1 à 12, **caractérisée en ce que** le tuyau d'échappement (6) comprend un catalyseur (6f) pourvu sous l'axe de pivotement (40) .

14. Motocyclette selon au moins l'une des revendications 1 à 13, **caractérisée en ce que**
l'axe de pivotement (40) comprend :
une première extrémité (40c) positionnée sur un côté parmi le côté gauche et le côté droit de la motocyclette ; et
une deuxième extrémité (40d) positionnée sur l'autre côté parmi le côté gauche et le côté droit de la motocyclette,
le châssis de corps de véhicule (10) comprend :
un premier châssis latéral (19L) connecté à la première extrémité (40c) de l'axe de pivotement (40) ; et
un deuxième châssis latéral (19R) connecté à la deuxième extrémité (40d) de l'axe de pivotement (40), et
le tuyau d'échappement (6) chevauche partiellement le premier châssis latéral (19L) quand la motocyclette est vue depuis l'arrière.

15. Motocyclette selon au moins l'une des revendications 1 à 14, **caractérisée en ce qu'**un joint (25) entre le moteur (3) et l'arbre d'entraînement (7) est positionné sur un côté de l'axe de pivotement (40), le joint chevauchant partiellement le tuyau d'échappement (6) quand la motocyclette est vue depuis l'arrière.
